# EUROPEAN PATENT SPECIFICATION

(11) **EP 0 995 685 B1**
(45) Date of publication and mention of the grant of the patent: **16.04.2003**
(21) Application number: 98119961.5
(22) Date of filing: 22.10.1998
(51) Int. Cl.: B65B 69/00, A23G 9/28, A23G 9/22, B65D 85/78

(54) **Frozen Dessert Dispensing System**
Abgabeeinheit für gefrorene Süssspeisen
Distributeur de dessert glacé

(43) Date of publication of application: 26.04.2000
(73) Proprietor: Ezee Whip Dispensing Systems Limited, Milton Keynes, MK9 2AF (GB)
(72) Inventor: Ezee Whip Dispensing Systems Limited, Milton Keynes, MK9 2AF (GB)
(74) Representative: Raynor, Simon Mark

(56) References cited:
- WO-A-92/19389
- WO-A-94/13154
- WO-A-96/01224
- US-A- 2 889 949
- US-A- 5 020 698

## Description

The present invention relates to a dispensing system for frozen desserts. In particular, but not exclusively, the invention relates to a dispensing system for ice-cream, frozen yoghurt and sorbets, including a plurality of containers, each containing an individual portion of the frozen dessert and a dispenser for dispensing the dessert from the container into for example a serving dish or wafer cornet. In particular but not exclusively the invention relates to an ice-cream dispensing system for use by ice-cream sellers, and in restaurants and fast food outlets.

Commercially, individual portions of ice-cream may be dispensed using a soft-serve machine, in which the ice-cream is mixed and frozen in bulk. Alternatively ice-cream may be dispensed using a dispensing machine from a bulk container pre-filled with ice-cream before being placed within the machine, for example the dispensing system described in WO 94/14333. These dispensing systems have disadvantages for both retailer and customer. There is no control of the size of the individual portions dispensed, and if not all the ice-cream is sold within a certain time period, there is the possibility of deterioration ofthe bulk product. The dispensing machines are expensive and bulky, and normally limit customers to just one flavour.

Individual portions of ice-cream also may be dispensed from large tubs using scoops. Although customers have a choice of flavours, this method of dispensing ice-cream is slow and time consuming. Again there is no control of the size of the individual portions dispensed, with the possibility of deterioration of the bulk product, if not all the ice-cream is sold within a certain time period. This method of dispensing ice-cream can also be less hygienic than machine dispensing.

Individual ice-creams may also be sold in pre-packaged portions. This alleviates the problem of portion control, however it cannot be readily used in certain commercial outlets, for example restaurants, since the portion can generally not be presented attractively.

A means and a method for dispensing individual portions of ice-cream is described in WO 94/13154. Ice-cream is supplied in containers, each of which contains an individual portion of the ice-cream. The containers are filled through an open end which is then sealed with a closure member. The containers are preferably hemispherical in shape or alternatively may be of a truncated cone shape with the side walls tapering inwards towards a circular base. When required, a container is placed in a discharge unit, including a plunger of corresponding shape. The plunger is activated, deforming either the container or the closing member and the product is discharged through an outlet either in the closure member or in the container.

There are however, a number of disadvantages with this dispensing system. The dispensing mechanism is complicated and expensive. The system is not suitable for manual operation due to the large force, in the region of 30-40psi, which is required to dispense the ice-cream from the container. The container is shaped like a tub. This results in customers often assuming that they are purchasing a tub of ice-cream, rather than a ice-cream that needs to be dispensed from the container. The shape of the containers causes stacking of the containers to be difficult and results in a poor use of space. The containers are also difficult to fill resulting in the presence air pockets within the ice-cream. Furthermore, the outlet is so small that only ice-cream without particulates can be dispensed. The container is deformed during the discharge process, preventing the container from being reused. The container does not always deform as intended, resulting in unreliable operation. It is also difficult to expel all the ice-cream from the dispenser.

It is an object of the present invention to provide a dispensing system for frozen desserts that mitigates at least some of the above mentioned problems.

According to the present invention there is provided a frozen dessert dispensing system, said dispensing system including a plurality of containers and a dispensing device, each container containing an individual portion of frozen dessert, each of said containers including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, said dispensing device including a plunger means having a longitudinal axis and mounted for reciprocating movement along its longitudinal axis, a drive means for driving said plunger along said axis, a support means for supporting said first end of one of said containers with said plunger in engagement with said piston means, the arrangement being such that with one of said containers located on said support means, the individual portion of frozen dessert may be dispensed by actuating said drive means.

The dispensing system allows individual portions of ice-cream to be dispensed easily and attractively into either a cornet or a bowl. This system provides a choice of flavours, quantity control of portion size, improved hygiene, and the ice-cream is dispensed quickly and efficiently.

Advantageously the individual portion of ice-cream lies in the range 100ml - 250ml, and preferably in the range 125ml - 200ml.

Advantageously the container is sealed with a removable cover.

The removable cover seals the container until it is required thereby reducing the chance of contamination.

Advantageously the container is rigid, and does not deform or collapse during the dispensing process. Preferably the container is made of high density polyethylene.

Advantageously the drive means for said dispensing means includes an arm attached to a pivot pin to engage said plunger, the arrangement being such that when said pivot pin rotates, said arm engages with and drives said plunger. Preferably said arm engages a wheel mounted on said plunger. Advantageously the drive means includes an operating handle mounted on said pivot pin.

Advantageously the diameter of the plunger is slightly less than the internal diameter of the cylindrical tube of the container.

According to a further aspect of the present invention there is provided a method of dispensing frozen dessert from a container containing an individual portion of frozen dessert using a dispensing device, said container including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, said dispensing device including a plunger means having a longitudinal axis and mounted for reciprocating movement along its longitudinal axis, a drive means for driving said plunger along said axis, a support means for supporting said container with said plunger in engagement with said piston means, the method including placing the container of frozen dessert on said support means, operating said drive means to actuate said plunger, which engages with said piston driving it along the tube, and dispensing the frozen dessert through said nozzle into a serving container. The serving container may for example be a cornet or a glass bowl.

According to a further aspect of the present invention there is provided a container for use in a dispensing system for frozen desserts, said container containing an individual portion of frozen dessert, said container including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, the wall of the first end that extends beyond the nozzle means being slightly thicker than the wall of the rest of the tube.

Embodiments of the invention will now be described, by way of example, with reference to the accompanying drawings of which :
Figure 1 is a perspective side view of a container;
Figure 2 is an end view of the container from the first end;
Figure 3 is an end view of the container from the second end;
Figure 4 is a side view, in cross-section, of the container on line IV-IV in figure 2;
Figure 5 is a perspective side view of the container with a cover seal;
Figure 6 is a side view, in cross-section, of a dispenser;
Figure 7 is a front view, in cross-section, of the dispenser;
Figure 8 is a top view of the dispenser, showing hidden details;
Figure 9 is a perspective side view of the dispenser;
Figure 10 is a side view of the arm;
Figure 11 is a top view of the support base;
Figure 12 is a side view, in cross-section, of a second form of the dispenser, with the container in position.
Figure 13 is a front view, in cross-section, of a second form of the dispenser, with the container in position.

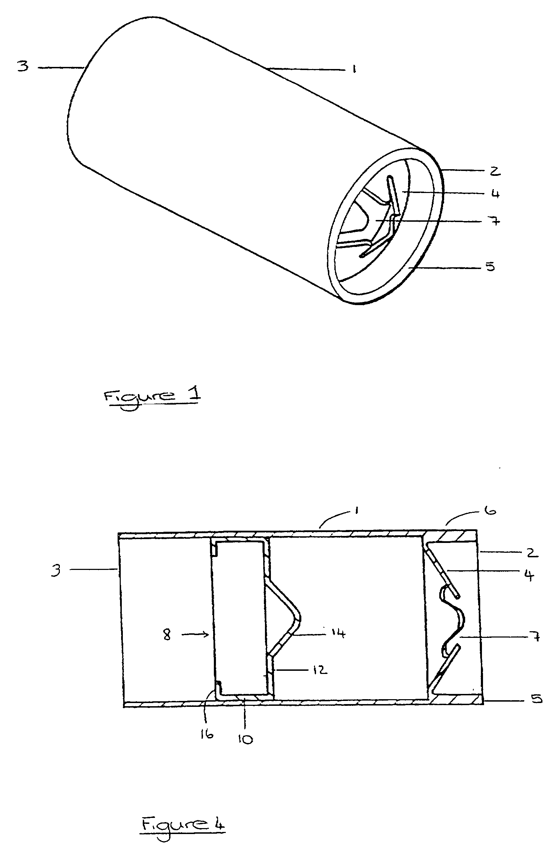

As shown in figures 1 and 4, the ice-cream container consists of a cylindrical tube 1 with first 2 and second ends 3.

A conical nozzle 4 partially closes the first end 2 of the cylindrical tube 1. The tube extends beyond the nozzle and has an end face 5 for engaging a support. The wall of the end part 6 that extends beyond the nozzle 4 is slightly thicker than the wall of the rest of the tube, increasing the strength of the end part 6. The nozzle 4, which is shown in more detail in figure 2, includes a star-shaped aperture 7. This produces an attractive decorative pattern on the surface of the ice-cream as it is extruded through the nozzle 4, and allows the extruded ice-cream to flex so that it may be served easily in either dishes or comets.

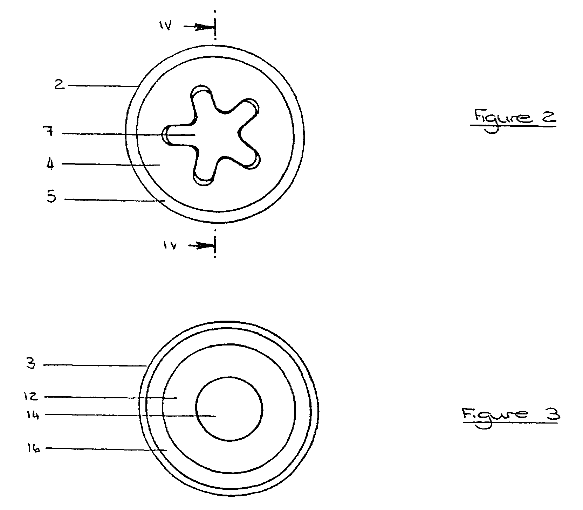

As shown in figure 4, a piston 8 is located within the main body of the tube 1, between the nozzle 4 and the second end 3. The piston is hollow having a cylindrical wall 10, a circular first face 12 with a convex conical section 14 in the centre, and an annular second face 16. Figure 3 shows an end view of these features.

Alternative forms of the piston are possible, for example, as shown in Figures 6, and 7. The first face may be substantially conical in shape. Instead of having an annular second face, the piston may include a ring 17 on the rear surface of the front face.

Furthermore, to clean the tube thoroughly a lip may be provided on the circumferential surface of the piston (not shown).

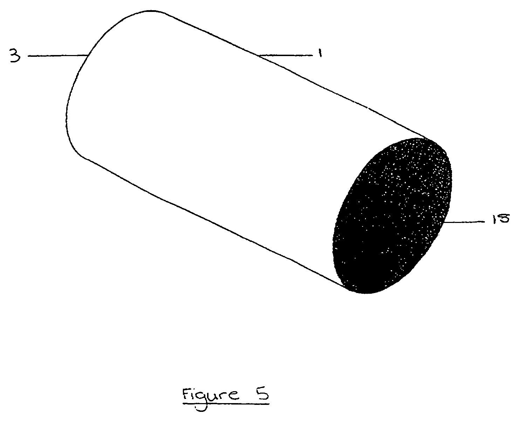

The conical nozzle and cylindrical tube are moulded as one part from a plastics material, for example high density polyethylene. The piston is then placed in position within the tube such that the space between the piston and nozzle is the predetermined volume of a single portion of ice-cream, for example 125ml. The container is filled with the ice-cream through the nozzle and then frozen. The ice-cream is of the normal "soft scoop" type. Once filled, the first end 2 of the container is sealed, as shown in figure 5, with a removable foil cover 18 that adheres to the end face 5 of the tube, protecting the ice-cream from contamination.

The ice-cream is expelled from the container through the nozzle 4 by driving the piston 8 along the cylindrical tube towards the nozzle 4. The shape of the piston ensures that substantially all the ice-cream within the container is expelled. The container is rigid and does not collapse during the expulsion ofthe ice-cream. The thicker end part 6 reinforces the container to resist collapse due to the downward pressure applied to expel the ice-cream. Because the tube is cylindrical, the force required to drive the piston is substantially uniform.

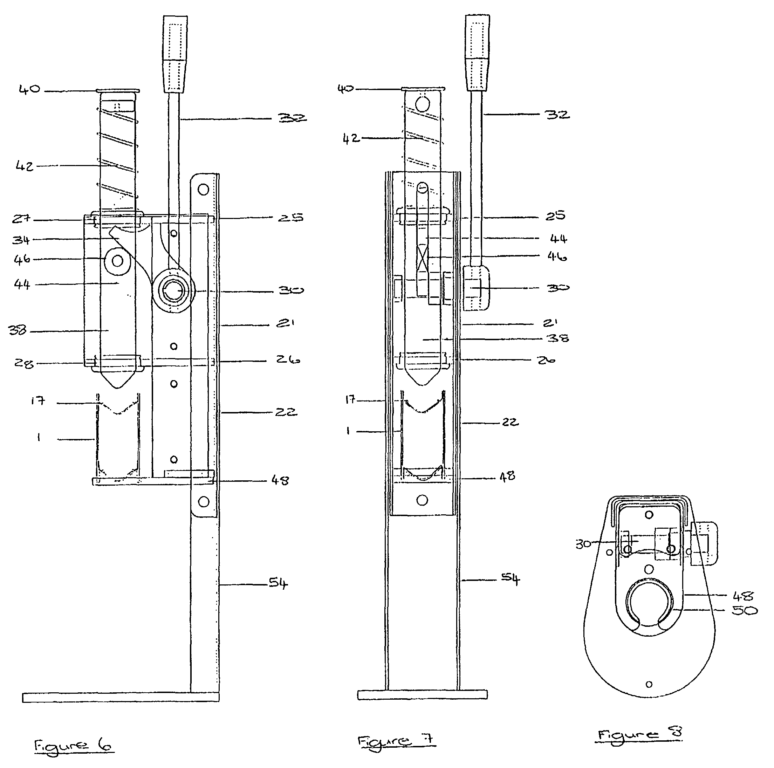

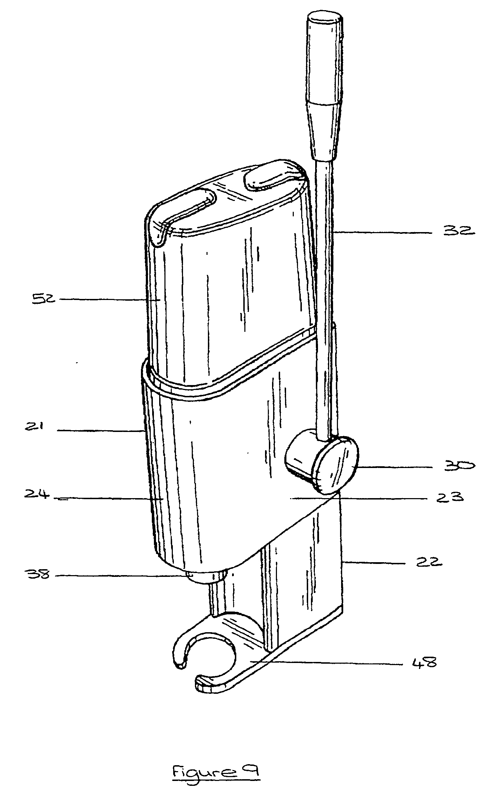

As shown in figures 6 to 9, the dispenser 20 includes a housing consisting of an upper portion 21 and a lower portion 22. The upper portion 21 includes two vertical flat sides 23 with a curved front plate 24 and top and bottom plates 25,26. Two bearings 27,28 are located within the upper portion 21, one in the top plate 25 and one in the bottom plate 26. Mounted within the upper portion 21 there is a pivot pin 30, which is free to rotate about its axis. A handle 32 is attached to the end of the pivot pin 30, which extends outwards through one side of the housing. Also attached to the pivot pin within the housing at an acute angle to the handle is an arm 34. Both the handle 32 and the arm 34 are perpendicular to the axis of the pivot pin 30.

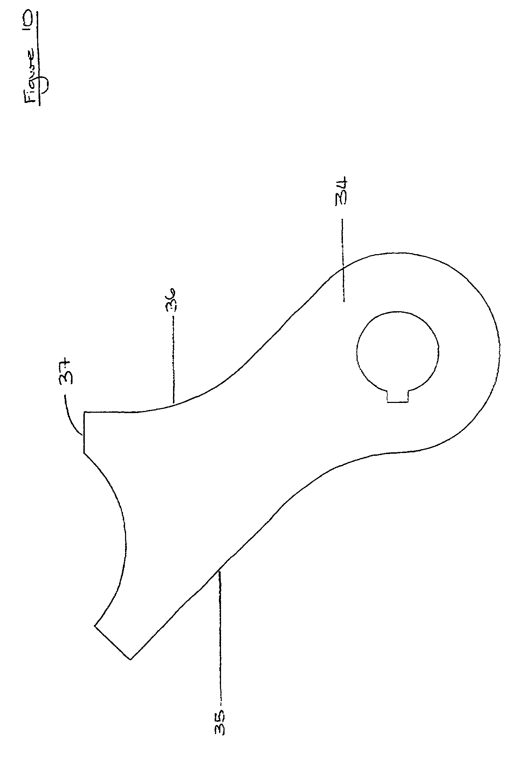

The arm 34, also shown in figure 10, consists of a plate with a lower edge 35 and a top edge 36. The top edge 36 includes a stop member 37, which is horizontal when the handle 32 is in the upper position and engages with the top plate 25.

A cylindrical plunger 38 is mounted vertically within the housing for reciprocating movement along its longitudinal axis. The diameter of the plunger is slightly less than the internal diameter of the container 1, and the base of the plunger is substantially conical in shape. The bearings 27,28 allow the plunger to move through the housing. At the top of the plunger there is a stop mechanism 40. A spring return mechanism 42 is provided, which biasses the plunger vertically upwards. The spring return mechanism 42 is situated between the stop mechanism 40 and the top bearing 27. Extending through the central part of the plunger is a slot 44. A wheel 46 is mounted within the slot 44, on which the lower edge 35 of the arm 34 rests.

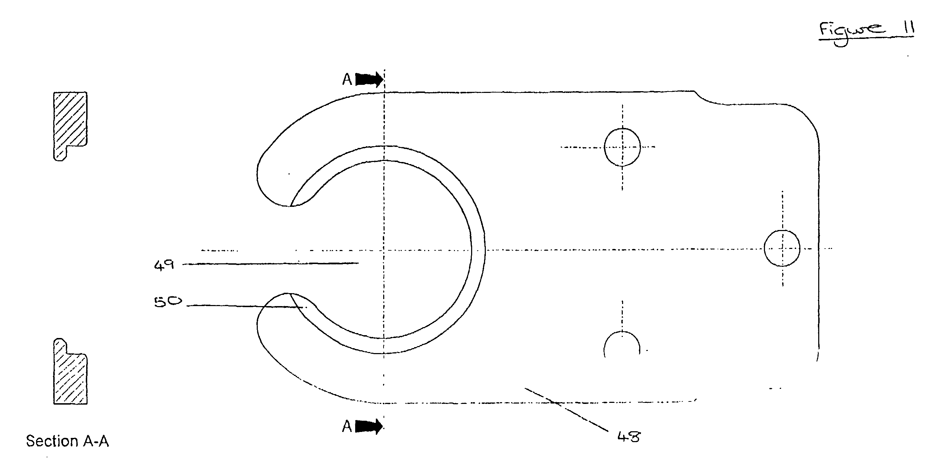

The lower portion 22 of the housing is narrower from front to back than the upper portion. Attached to the base of the lower portion 22 is a horizontal support plate 48. The support plate 48, also shown in figure 11, includes an open circular aperture 49 at the front end which is co-axial with the axis of the plunger 38. Around the edge of the aperture there is a C-shaped support surface 50 for engaging the end face 5 of the container such that the container is supported in an upright position with the axis of the container in line with the axis of the plunger 38.

A cap 52 is attached to the top of the upper portion 21 of the housing to hide the drive mechanism.

The dispenser 20 may either be wall mounted or mounted on a stand 54.

In the rest position, the handle 32 of the dispenser is in a vertical position. The operator pulls the handle 32 forwards, rotating the pivot pin 30. The arm 34 in turn engages the wheel 46 causing the plunger 38 to move downwards. Once the handle 32 is released, the spring return mechanism 42 drives the plunger 38 upwards to its original position within the housing.

The method of dispensing will now be described.

A customer chooses the desired flavour of ice-cream from the variety of flavours on offer. The operator removes a container of the selected flavour from the refrigerator. The protective foil cover is removed and the container placed vertically in position on the support base of the dispenser. A wafer cornet or bowl is held below the container. The handle of the dispenser is pulled forwards, towards the operator, driving the plunger down towards the container. The plunger engages the piston, forcing the ice-cream out of the nozzle. Expulsion of the ice-cream can be carefully controlled by the operation of the handle, enabling the operator to obtain the desired presentation. Once the individual portion of ice-cream has been expelled from the container, the plunger can be returned to its original position by releasing the handle. The ice-cream is then given to the customer, and the container removed and disposed of, or may be cleaned and refilled.

As will be apparent, the dispenser is very simple and easy to maintain and use. The dispenser is easy to operate manually since only a relatively small amount of force, about 8-9psi, is required to dispense the ice-cream from a container. The container is a tube, resulting in efficient packing of the containers within a freezer. Due to the shape of the container it is also obvious to customers that the ice-cream needs to be dispensed before they can eat it. The aperture of the nozzle is large enough to enable ice-cream containing particulates to be dispensed just as easily as smooth ice-cream. Thus this dispensing system enables different types and flavours of ice-cream to be served attractively quickly and easily. The design ofthe dispensing system is such that it is not necessary to dismantle any part of the dispenser in order to insert the container. The container is simply inserted perpendicularly to the axis of the plunger, and placed on the support base of the dispenser. The plunger is then brought into engagement with the piston of the container. After dispensing the ice-cream, the container is just as easily removed and disposed of appropriately. The system also reduces the possible hygiene problems associated with the scoop method of supplying ice-cream since the ice-cream sold is sealed until required, and the dispenser does not come into contact with the ice-cream.

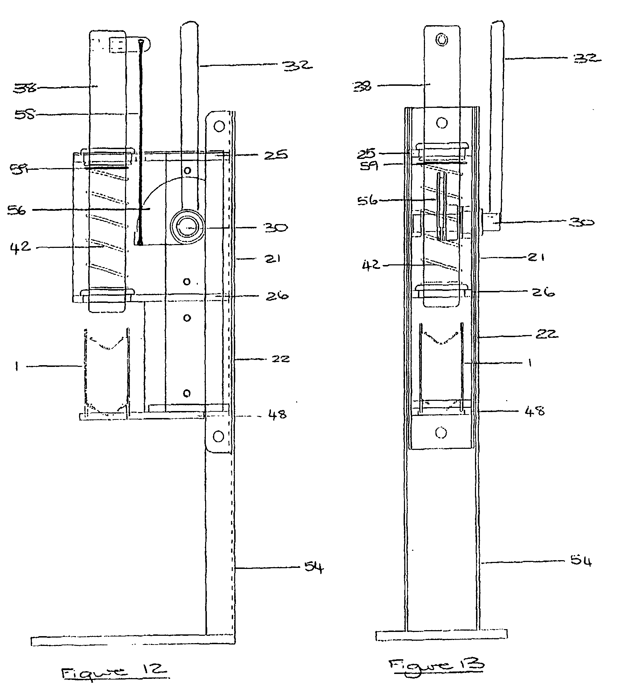

Various modifications of the dispensing system are envisaged, for example a pulley mechanism could be used in the dispenser instead of a cam mechanism, as shown in figures 12 and 13. Within the housing, a quadrant 56 is attached to the pivot pin 30. A cord 58 is attached to the top of the plunger 38 and to the base of the quadrant 56. There is a groove in the circumferential edge of the quadrant 56, in which the cord rests. When the handle 32 is pulled the quadrant 56 rotates downward pulling the cord 58 which in turn causes the plunger 38 to be driven downwards. The spring return mechanism 42, which then biasses the plunger vertically upwards, is positioned between a stop member 59 on the plunger 38 and the lower bearing 28. Instead of being conical, the base of the plunger 38 may also be flat.

Furthermore, instead of making the whole container out of plastic, the tube may be of waxed cardboard with a plastic nozzle and piston.

## Claims

1. A dispensing system for frozen desserts, said dispensing system including a plurality of containers and a dispensing device, each container containing an individual portion of frozen dessert, each of said containers including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, said dispensing device including a plunger means having a longitudinal axis and mounted for reciprocating movement along its longitudinal axis, a drive means for driving said plunger along said axis, a support means for supporting said first end of one of said containers with said plunger in engagement with said piston means, the arrangement being such that with one of said containers located on said support means, the individual portion of frozen dessert may be dispensed by actuating said drive means.

2. A dispensing system according to claim 1, wherein said individual portion lies in the range 100ml - 250ml.

3. A dispensing system according to claim 2, wherein said individual portion lies in the range 125ml - 200ml.

4. A dispensing system according to any of the preceding claims, wherein said first end of one of said containers is sealed with a removable cover.

5. A dispensing system according to any of the preceding claims, wherein said container is rigid.

6. A dispensing system according to claim 5, wherein said container is made of high density polyethylene.

7. A dispensing system according to claim 1, wherein said drive means includes an arm attached to a pivot pin to engage said plunger, the arrangement being such that when said pivot pin rotates, said arm engages with and drives said plunger.

8. A dispensing system according to claim 7, wherein said arm engages a wheel mounted on said plunger.

9. A dispensing system according to claim 7 or claim 8, wherein said drive means includes an operating handle mounted on said pivot pin.

10. A dispensing system according to claim 1, wherein the diameter of said plunger is slightly less than the internal diameter of the cylindrical tube of said container.

11. A method of dispensing frozen dessert from a container containing an individual portion of frozen dessert using a dispensing device, said container including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, said dispensing device including a plunger means having a longitudinal axis and mounted for reciprocating movement along its longitudinal axis, a drive means for driving said plunger along said axis, a support means for supporting said container with said plunger in engagement with said piston means, the method including providing said container of frozen dessert, placing the container of frozen dessert on said support means, operating said drive means to actuate said plunger, which engages with said piston driving it along the tube, and dispensing the frozen dessert through said nozzle into a serving container.

12. A container for use in a dispensing system for frozen desserts, as claimed in any one of claims 1 to 10, said container containing an individual portion of frozen dessert, said container including a substantially cylindrical tube having first and second ends, a nozzle means towards said first end, a piston means located between said nozzle means and said second end, said piston means being adapted for sliding movement along the tube, said individual portion of frozen dessert being contained within the cylindrical tube between said nozzle means and said piston means, the wall of the first end that extends beyond the nozzle means being slightly thicker than the wall of the rest of the tube.

13. A container according to claim 12, wherein said individual portion lies in the range 100ml-250ml.

14. A container according to claim 13, wherein said individual portion lies in the range 125ml - 200ml.

15. A container according to any one of claims 12 to 14, wherein said first end of said container is sealed with a removable coyer.

16. A container according to any of claims 12 to 15, wherein said container is rigid.

17. A container according to claim 16, wherein said container is made of high density polyethylene.

## Patentansprüche

1. Abgabesystem für gefrorene Süßspeisen, umfassend eine Vielzahl von Behältern und eine Abgabevorrichtung, wobei jeder Behälter eine Einzelmenge der gefrorenen Süßspeise enthält und eiri im wesentlichen zylindrisches Rohr mit einem ersten und einem zweiten Ende, ein Düsenelement am ersten Ende und ein Kolbenelement zwischen dem Düsenelement und dem zweiten Ende umfaßt und das Kolbenelement für eine Gleitbewegung entlang des Rohrs ausgestaltet ist und die Einzelmenge der gefrorenen Süßspeise in dem zylindrischen Rohr zwischen dem Düsenelement und dem Kolbenelement enthalten ist, und die Abgabevorrichtung einen Stempel mit longitudinaler Achse, der für eine Hin- und Herbewegung entlang seiner longitudinalen Achse angeordnet ist, ein Antriebsmittel zum Antreiben des Stempels entlang dieser Achse und ein Haltemittel umfaßt, um das erste Ende eines der Behälter mit dem Stempel in Verbindung mit der Kolbenvorrichtung zu halten, wobei die Anordnung derart ist, daß bei einem der auf der Haltevorrichtung befindlichen Behälter die Einzelmenge der gefrorenen Süßspeise durch Betätigung der Antriebsvorrichtung abgegeben werden kann.

2. Abgabesystem nach Anspruch 1, bei dem die Einzelmenge im Bereich von 100 ml - 250 ml liegt.

3. Abgabesystem nach Anspruch 2, bei dem die Einzelmenge im Bereich von 125 ml - 200 ml liegt.

4. Abgabesystem nach einem der vorigen Ansprüche, bei dem das erste Ende des Behälters mit einer entfernbaren Abdeckung verschlossen ist.

5. Abgabesystem nach einem der vorigen Ansprüche, bei dem der Behälter fest ist.

6. Abgabesystem nach Anspruch 5, bei dem der Behälter aus Polyethylen hoher Dichte besteht.

7. Abgabesystem nach Anspruch 1, bei dem das Antriebsmittel einen an einem Drehbolzen befestigten Arm umfaßt, um an dem Stempel einzugreifen, wobei die Anordnung so gestaltet ist, dass der Arm am Stempel angreift und diesen antreibt, wenn der Drehbolzen rotiert.

8. Abgabesystem nach Anspruch 7, bei dem der Arm an einem auf dem Stempel angeordneten Rad angreift.

9. Abgabesystem nach Anspruch 7 oder Anspruch 8, bei dem das Antriebsmittel einen auf dem Drehbolzen angeordneten Bedienungsgriff umfaßt.

10. Abgabesystem nach Anspruch 1, bei dem der Durchmesser des Stempels geringfügig kleiner ist als der innere Durchmesser des zylindrischen Rohres des Behälters.

11. Verfahren zum Abgeben einer gefrorenen Süßspeise aus einem Behälter beinhaltend eine Einzelmenge der gefrorenen Süßspeise unter Verwendung einer Abgabevorrichtung, wobei der Behälter ein im wesentlichen zylindrisches Rohr mit einem ersten und einem zweiten Ende, ein Düsenelement am ersten Ende und ein Kolbenelement zwischen dem Düsenelement und dem zweiten Ende umfaßt, und das Kolbenelement für eine Gleitbewegung entlang des Rohrs ausgestaltet ist und die Einzelmenge der gefrorenen Süßspeise in dem zylindrischen Rohr zwischen dem Düsenelement und dem Kolbenelement enthalten ist, und das Abgabesystem einen Stempel mit longitudinaler Achse, der für eine Hin- und Herbewegung entlang seiner longitudinalen Achse angeordnet ist, ein Antriebsmittel zum Antreiben des Stempels entlang dieser Achse und ein Halteelement, um den Behälter mit dem Stempel in Verbindung mit dem Kolbenelement zu halten, umfaßt, wobei das Verfahren die Bereitstellung des Behälters mit der gefrorenen Süßspeise, die Anordnung des Behälters mit der gefrorenen Süßspeise auf dem Halteelement und die Betätigung des Antriebsmittels, um den Stempel anzutreiben, umfaßt, welcher an dem Kolben angreift, ihn entlang des Rohres fährt und die gefrorene Süßspeise durch die Düse in einen Auffangbehälter abgibt.

12. Behälter zur Verwendung in einem Abgabesystem für gefrorene Süßspeisen nach einem der Ansprüche 1 bis 10, wobei der Behälter eine Einzelmenge einer gefrorenen Süßspeise enthält und ein im wesentlichen zylindrisches Rohr mit einem ersten und einem zweiten Ende und ein Düsenelement am ersten Ende und ein Kolbenelement zwischen dem Düsenelement und dem zweiten Ende umfaßt, wobei das Kolbenelement für eine Gleitbewegung entlang des Rohrs ausgestaltet ist und die Einzelmenge der gefrorenen Süßspeise in dem zylindrischen Rohr zwischen dem Düsenelement und dem Kolbenelement enthalten ist und die Wandung, am ersten, sich hinter dem Düsenelement erstreckenden Ende geringfügig dicker ist als die Wandung des restlichen Rohrs.

13. Behälter nach Anspruch 12, bei dem die Einzelmenge im Größenbereich von 100 ml - 250 ml liegt.

14. Behälter nach Anspruch 13, bei dem die Einzelmenge im Größenbereich von 125 ml - 200 ml liegt.

15. Behälter nach einem der Ansprüche 12 bis 14 , bei dem das erste Ende des Behälters mit einer entfembaren Abdeckung verschlossen ist.

16. Behälter nach einem der Ansprüche 12 bis 15, bei dem der Behälter fest ist.

17. Behälter nach Anspruch 16, bei dem der Behälter aus Polyethylen hoher Dichte besteht.

## Revendications

1. Système de distribution pour des desserts glacés, ledit système de distribution incluant une pluralité de récipients et un dispositif de distribution, chaque récipient contenant une portion individuelle de dessert glacé, chacun desdits récipients incluant un tube sensiblement cylindrique présentant des première et seconde extrémités, des moyens de buse en direction de ladite première extrémité, des moyens de piston situés entre lesdits moyens de buse et ladite seconde extrémité, lesdits moyens de piston étant conçus pour effectuer un mouvement coulissant le long du tube, ladite portion individuelle de dessert glacé étant contenue à l'intérieur du tube cylindrique entre lesdits moyens de buse et lesdits moyens de piston, ledit dispositif de distribution incluant des moyens de poussoir présentant un axe longitudinal et montés de manière à effectuer un mouvement de va-et-vient le long de leur axe longitudinal, des moyens d'entraînement permettant d'entraîner ledit poussoir le long dudit axe, des moyens de support permettant de supporter ladite première extrémité de l'un desdits récipients, ledit poussoir étant en prise avec lesdits moyens de piston, l'agencement étant tel que, lorsque l'un desdits récipients est situé est (sont) situé(s) sur lesdits moyens de support, la portion individuelle de dessert glacé peut être délivrée en actionnant lesdits moyens d'entraînement.

2. Système de distribution selon la revendication 1, dans lequel ladite portion individuelle se trouve dans la plage comprise entre 100 et 250 ml.

3. Système de distribution selon la revendication 2, dans lequel ladite portion individuelle se trouve dans la plage comprise entre 125 et 200 ml.

4. Système de distribution selon l'une quelconque des revendications précédentes, dans lequel ladite première extrémité de l'un desdits récipients est rendue étanche par un couvercle amovible.

5. Système de distribution selon l'une quelconque des revendications précédentes, dans lequel ledit récipient est rigide.

6. Système de distribution selon la revendication 5, dans lequel ledit récipient est constitué de polyéthylène haute densité.

7. Système de distribution selon la revendication 1, dans lequel lesdits moyens d'entraînement incluent un bras fixé à un axe de pivotement pour venir en prise avec ledit poussoir, l'agencement étant tel que lorsque ledit axe de pivotement tourne, ledit bras vient en prise avec et entraîne ledit poussoir.

8. Système de distribution selon la revendication 7, dans lequel ledit bras vient en prise avec une roue montée sur ledit poussoir.

9. Système de distribution selon la revendication 7 ou 8, dans lequel lesdits moyens d'entraînement incluent une poignée d'actionnement fixée sur ledit axe de pivotement.

10. Système de distribution selon la revendication 1, dans lequel le diamètre dudit poussoir est légèrement inférieur au diamètre interne du tube cylindrique dudit récipient.

11. Procédé de distribution de dessert glacé depuis un récipient contenant une portion individuelle de dessert glacé utilisant un dispositif de distribution, ledit récipient incluant un tube sensiblement cylindrique présentant des première et seconde extrémités, des moyens de buse en direction de ladite première extrémité, des moyens de piston situés entre lesdits moyens de buse et ladite seconde extrémité, lesdits moyens de piston étant conçus pour effectuer un mouvement coulissant le long du tube, ladite portion individuelle de dessert glacé étant contenue à l'intérieur du tube cylindrique entre lesdits moyens de buse et lesdits moyens de piston, ledit dispositif de distribution incluant des moyens de poussoir présentant un axe longitudinal et montés de manière à effectuer un mouvement de va-et-vient le long de leur axe longitudinal, des moyens d'entraînement permettant d'entraîner ledit poussoir le long dudit axe, des moyens de support permettant de supporter ledit récipient alors que ledit poussoir est en prise avec lesdits moyens de piston, le procédé incluant la fourniture dudit récipient de dessert glacé, le placement du récipient de dessert glacé sur lesdits moyens de support, l'actionnement desdits moyens d'entraînement pour actionner ledit poussoir, qui vient en prise avec ledit piston en l'entraînant le long dudit tube, et la distribution du dessert glacé au travers de ladite buse pour parvenir à un récipient dans lequel le dessert est servi.

12. Récipient destiné à être utilisé dans un système de distribution pour des desserts glacés selon l'une quelconque des revendications 1 à 10, ledit récipient contenant une portion individuelle de dessert glacé, ledit récipient incluant un tube sensiblement cylindrique présentant des première et seconde extrémités, des moyens de buse en direction de ladite première extrémité, des moyens de piston situés entre lesdits moyens de buse et ladite seconde extrémité, lesdits moyens de piston étant conçus pour effectuer un mouvement coulissant le long du tube, ladite portion individuelle de dessert glacé étant conçue pour effectuer un mouvement coulissant le long du tube, ladite portion individuelle de dessert glacé étant contenue à l'intérieur du tube cylindrique entre lesdits moyens de buse et lesdits moyens de piston, la paroi de la première extrémité qui s'étend au-delà des moyens de buse étant légèrement plus épaisse que la paroi du reste du tube.

13. Récipient selon la revendication 12, dans lequel ladite portion individuelle se trouve dans la plage comprise entre 100 et 250 ml.

14. Récipient selon la revendication 13, dans lequel ladite partie individuelle se trouve dans la plage comprise entre 125 et 200 ml.

15. Récipient selon l'une quelconque des revendications 12 à 14, **caractérisé en ce que** ladite première extrémité dudit récipient est rendue étanche par un couvercle amovible.

16. Récipient selon l'une quelconque des revendications 12 à 15, dans lequel ledit récipient est rigide.

17. Récipient selon la revendication 16, dans lequel ledit récipient est constitué de polyéthylène haute densité.
